# EUROPEAN PATENT APPLICATION

(11) **EP 4 651 426 A1**
(43) Date of publication of application: **19.11.2025**
(21) Application number: 24757192.0
(22) Date of filing: 14.02.2024
(51) Int. Cl.: H04L 9/06

(54) **ELECTRONIC DEVICE AND METHOD OF TRANSMITTING, BY ELECTRONIC DEVICE, CHARACTER STRING DATA OF WHICH PRIVACY IS SECURED**

(30) Priority: 16.02.2023 KR 20230020664
(71) Applicant: Samsung Electronics Co., Ltd., Suwon-si, Gyeonggi-do 16677 (KR)
(72) Inventor: LEE, Jiwon, Suwon-si Gyeonggi-do 16677 (KR); KOO, Wookwon, Suwon-si Gyeonggi-do 16677 (KR); KIM, Seolheui, Suwon-si Gyeonggi-do 16677 (KR); KIM, Soohyung, Suwon-si Gyeonggi-do 16677 (KR); NAM, Dongkyun, Suwon-si Gyeonggi-do 16677 (KR)
(74) Representative: Gulde & Partner
(86) International application number: PCT/KR2024/002050
(87) International publication number: WO 2024/172467

(57) **Abstract**

An electronic device according to various embodiments of the present disclosure may comprise a communication module and at least one processor, wherein the at least one processor is configured to: obtain a character string; divide the obtained character string by a designated character string unit to obtain first character string blocks; obtain second character string blocks by inserting connection information between the first character string blocks into each of the first character string blocks; apply a local differential privacy algorithm for each of the second character string blocks; and transmit, to the outside via the communication module, character string data including the second character string blocks to which the local differential privacy algorithm has been applied. Other embodiments may also be possible.

## Description

### [Technical Field]

Various embodiments of the disclosure relate to an electronic device and an operation method thereof and, more specifically, to an electronic device for transmitting, to a server, privacy-secured character string data and an operation method thereof.

### [Background Art]

Artificial Intelligence (AI) systems are computer systems that implement human-level intelligence, and include machine learning (deep learning) and element technologies utilizing machine learning. Machine learning is an algorithm technology that classifies/learns the characteristics of input data on its own, and element technology is a technology that utilizes machine learning algorithms such as deep learning, and includes technology fields such as linguistic understanding, visual understanding, inference/prediction, knowledge representation, and motion control.

The linguistic understanding is a technology that recognizes and applies/processes human language/characters and includes natural language processing, machine translation, conversational systems, question-answering, and speech recognition/synthesis. Various methods for collecting and managing various data for linguistic understanding have been proposed. For example, an electronic device may transmit character string data including text such as search words, messages, or URLs used in the electronic device to an external data collection device (e.g., a server), and the server may collect character string data from the electronic devices and manage and utilize same.

### [Detailed Description of the Invention]

### [Technical Problem]

When an electronic device transmits character string data, privacy may need to be guaranteed because the character string data may include sensitive information of a user of the electronic device or personal information that requires security.

In order to maintain the security of character string data transmitted from an electronic device, noise may be inserted into the character string data to obfuscate the character string data, and the obfuscated character string data may be transmitted to a server. The longer the length of the character string data to be transmitted from the electronic device, the more complex the obfuscation process may become and the more complex the restoration and verification process may become when receiving the obfuscated character string from the server.

### [Technical Solution]

An electronic device according to an embodiment of the disclosure may include a communication module, memory, and at least one processor. The at least one processor according to an embodiment may obtain a character string, obtain first character string blocks by dividing the obtained character string into designated character string units. The at least one processor according to an embodiment may obtain second character string blocks by inserting connection information between the first character string blocks into each of the first character string blocks. The at least one processor according to an embodiment may apply a local differential privacy algorithm to each of the second character string blocks. The at least one processor according to an embodiment may be configured to transmit character string data including second character string blocks to which the local differential privacy algorithm has been applied to the outside through the communication module.

According to an embodiment of the disclosure, a method for transmitting privacy-secured character string data in an electronic device may include an operation of obtaining a character string. The method according to an embodiment may include an operation of obtaining first character string blocks by dividing the obtained character string into designated character string units. The method according to an embodiment may include an operation of obtaining second character string blocks by inserting connection information between the first character string blocks into each of the first character string blocks. The method according to an embodiment may include an operation of applying a local differential privacy algorithm to each of the second character string blocks. The method according to an embodiment may include an operation of transmitting character string data including second character string blocks to which the local differential privacy algorithm has been applied to the outside through a communication module.

An electronic device according to an embodiment of the disclosure may include a communication module and at least one processor. The at least one processor according to an embodiment may receive character string data including second character string blocks to which a local differential privacy algorithm has been applied from an external electronic device through the communication module. The at least one processor according to an embodiment may obtain second character string blocks by performing an inverse calculation using noise statistics based on a local differential privacy algorithm with respect to the character string data. The at least one processor according to an embodiment may obtain first character string blocks and connection information between the first character string blocks from the obtained second character string blocks. The at least one processor according to an embodiment may obtain a character string based on the first character string blocks and the connection information between the first character string blocks.

According to an embodiment of the disclosure, a method for receiving privacy-secured character string data in an electronic device may include an operation of receiving character string data including second character string blocks to which a local differential privacy algorithm has been applied from an external electronic device through a communication module. The method according to an embodiment may include an operation of obtaining second character string blocks by performing an inverse calculation using noise statistics based on a local differential privacy algorithm with respect to the character string data. The method according to an embodiment may include an operation of obtaining first character string blocks and connection information between the first character string blocks from the obtained second character string blocks. The method according to an embodiment may include an operation of obtaining a character string based on the first character string blocks and the connection information between the first character string blocks.

An embodiment of the disclosure provides a non-volatile storage medium storing instructions configured to, when executed by an electronic device, cause the electronic device to perform at least one operation, wherein the at least one operation may include an operation of obtaining a character string, an operation of obtaining first character string blocks by dividing the obtained character string into designated character string units, an operation of obtaining second character string blocks in which connection information between the first character string blocks is inserted into each of the first character string blocks, an operation of applying a local differential privacy algorithm for each of the second character string blocks, and an operation of transmitting, to the outside through the communication module, character string data including the second character string blocks to which the local differential privacy algorithm has been applied.

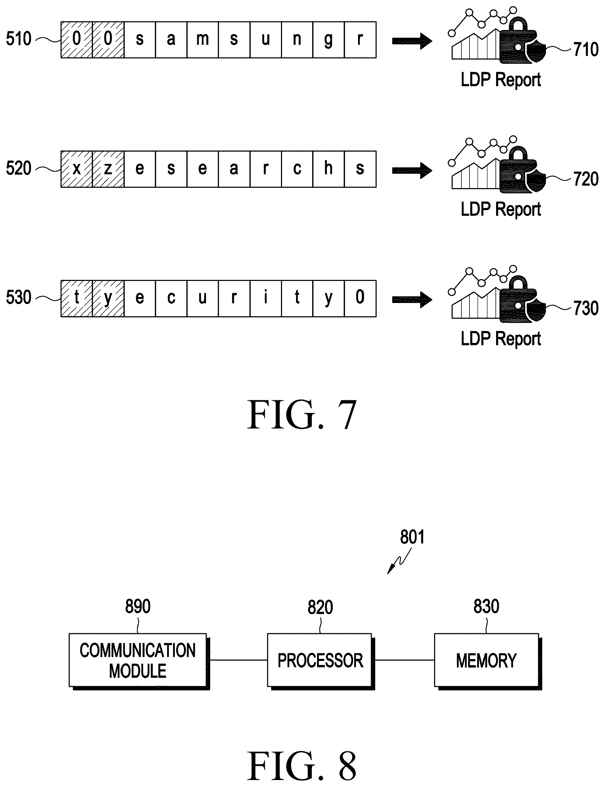

An embodiment of the disclosure provides a non-volatile storage medium storing instructions configured to, when executed by an electronic device, cause the electronic device to perform at least one operation, wherein the at least one operation may include an operation of receiving, from an external electronic device through a communication module (830 in FIG. 8), character string data including second character string blocks to which a local differential privacy algorithm has been applied, an operation of obtaining second character string blocks by performing an inverse calculation using noise statistics based on a local differential privacy algorithm with respect to the character string, an operation of obtaining first character string blocks and connection information between the first character string blocks from the obtained second character string blocks, and an operation of obtaining a character string based on the first character string blocks and the connection information between the first character string blocks.

### [Advantageous Effects]

An embodiment of the disclosure may provide an electronic device and a method for transmitting privacy-assured character string data in the electronic device, which, when transmitting relatively long character string data, may effectively obfuscate and transmit long character string data by dividing the character string into character string blocks of designated units, inserting connection information into each of the character string blocks of designated units to obfuscate the character string blocks, and transmitting the obfuscated character string blocks.

An embodiment of the disclosure may provide an electronic device and a method for receiving privacy-assured character string data in the electronic device, which may effectively collect long character string data by receiving character string blocks that are divided into designated units and obfuscated by inserting connection information, restoring the received character string blocks, and connecting the restored character string blocks based on the connection information to obtain long character string data.

### [Brief Description of Drawings]

FIG. 1 is a block diagram of an electronic device in a network environment according to an embodiment.
FIG. 2 is a block diagram illustrating an electronic device according to an embodiment.
FIG. 3 is a flowchart illustrating a privacy-secured character string data transmission operation in an electronic device according to an embodiment.
FIG. 4 is a diagram illustrating an example of dividing an obtained character string into designated character string units according to an embodiment.
FIG. 5 is a diagram illustrating an example of obtaining second character string blocks by adding a hash value corresponding to a previous character string block as a tag to each of first character string blocks according to an embodiment.
FIG. 6 is a diagram illustrating an example of obtaining second character string blocks by adding a hash value corresponding to a subsequent character string block as a tag to each of first character string blocks according to an embodiment.
FIG. 7 is a diagram illustrating an example of applying LDP to each of second character string blocks according to an embodiment.
FIG. 8 is a block diagram illustrating an external device according to an embodiment.
FIG. 9 is a flowchart illustrating an operation of obtaining a character string from character string data received from a server according to an embodiment.
FIG. 10 is a diagram illustrating an example of obtaining a second character string from second character string blocks to which LDP has been applied according to an embodiment.
FIG. 11 is a diagram illustrating an example of obtaining first character string blocks and connection information between the first character string blocks from second character string blocks according to an embodiment.
FIG. 12 is a diagram illustrating another example of obtaining first character string blocks and connection information between the first character string blocks from second character string blocks according to an embodiment.
FIG. 13 is a diagram illustrating an operation of transmitting character string data corresponding to a URL in an electronic device and restoring character string data received by a server to a URL according to an embodiment.

In connection with a description of the drawings, like or similar reference numerals may be used for like or similar elements.

### [Mode for Carrying out the Invention]

Terms used in this disclosure are used to describe specified embodiments and may not be intended to limit the scope of another embodiment. The terms of a singular form may include plural forms unless they have a clearly different meaning in the context. All the terms used herein, which include technical or scientific terms, may have the same meaning that is generally understood by a person skilled in the art. It will be further understood that terms, which are defined in a dictionary and commonly used, should also be interpreted as being customary in the relevant related art and not in an idealized or overly formal unless expressly so defined in various embodiments of the disclosure. In some cases, terms, even if defined in the disclosure, may not be interpreted to exclude embodiments of the disclosure.

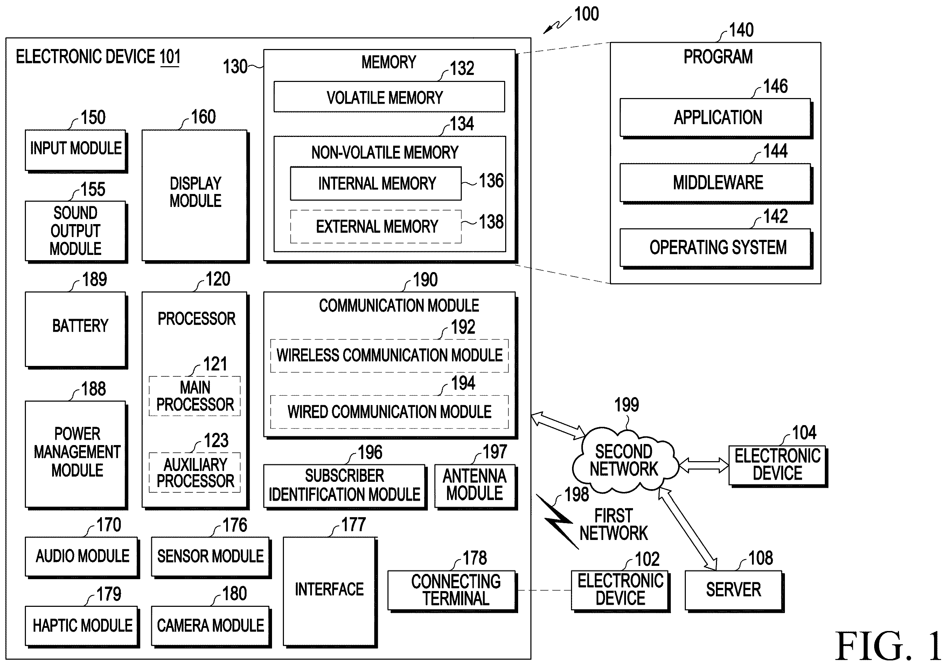

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

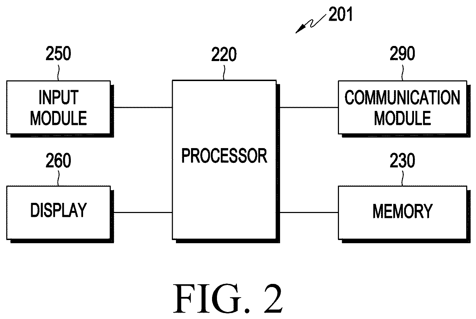

FIG. 2 is a block diagram illustrating an electronic device according to an embodiment.

Referring to FIG. 2, an electronic device 201 (e.g., the electronic device 101 in FIG. 1) according to an embodiment may include at least one processor (hereinafter, also referred to as a processor) 220, memory 230, a display 260, an input module 250, and/or a communication module 290. Without limitation thereto, the electronic device 201 may be configured to additionally include various components or omit some of the components. The electronic device 201 according to an embodiment may further include the entirety or a portion of the electronic device 101 shown in FIG. 1.

According to an embodiment, the processor 220 (e.g., processor 120 in FIG. 1) may include an application processor (AP) and/or a central processing unit (CPU).

According to an embodiment, the processor 220 (e.g., processor 120 in FIG. 1) may obtain a character string. According to an embodiment, the character string may include a text corresponding to an object to be collected among text input to the electronic device 201 or generated during the operation of the electronic device 201. For example, the character string may include a search word, a message, a uniform resource locator (URL) input to the electronic device 201 or generated in the electronic device 201, and may further include another type of text that is an object to be collected among text input to the electronic device 201 or generated in the electronic device 201.

According to an embodiment, the processor 220 may divide the obtained character string into designated character string units to obtain first character string blocks. According to an embodiment, the processor 220 may divide the length l of the obtained character string by a designated character string unit length k to obtain [l/k] first character string blocks. According to an embodiment, in case that the value of [l/k] is not an integer, the processor 220 may add a designated padding value to cause the length of a last block among the first character string blocks to become k, so that the value of [l/k] becomes an integer. According to an embodiment, the processor 220 may assign a block index to each of the first character string blocks. According to an embodiment, the processor 220 may adjust the designated character string unit length k based on the length 1 of the character string or a designated condition.

The processor 220 according to an embodiment may obtain second character string blocks in which connection information between the first character string blocks is inserted into each of the first character string blocks. According to an embodiment, the processor 220 may obtain the second character string blocks by adding a hash value corresponding to a previous character string block as a tag to each of the first character string blocks or may obtain the second character string blocks by adding a hash value corresponding to a subsequent character string block as a tag to each of the first character string blocks. According to an embodiment, the processor 220 may adjust the length of the tag based on a designated character string unit length k or a designated condition.

The processor 220 according to an embodiment may apply a local differential privacy (LDP) algorithm to each of the second character string blocks. According to an embodiment, the processor 220 may obtain the second character string blocks to which local differential privacy has been applied by mixing noise with a predetermined probability and distribution into each of the second character string blocks according to the application of the local differential privacy algorithm.

According to an embodiment, the processor 220 may transmit character string data (e.g., an LDP report) including the second character string blocks to which a local differential privacy algorithm has been applied, to an external device (e.g., a server 108 in FIG. 1). According to an embodiment, the processor 220 may transmit the entirety of the second character string blocks to which the local differential privacy algorithm has been applied, or may select a portion of the second character string blocks to which the local differential privacy algorithm has been applied, and transmit same to the external device. The processor 220 according to an embodiment may adjust the number of blocks to be transmitted among the second character string blocks to which the local differential privacy algorithm has been applied. The external device according to an embodiment may be a device that collects character string data and restores the character string data to obtain an original character string.

Table 1 below may represent an example of an algorithm for the case where LPD has been applied to the second character string blocks in which a hash value corresponding to a previous character string block is added as a tag to each of the first character string blocks, and for the case where LPD has been applied to the second character string blocks in which a hash value corresponding to a subsequent character string block is added as a tag to each of the first character string blocks.

**[Table 1]**

| | |
|---|---|
| The case where LPD has been applied to the second character string blocks in which a hash value corresponding to a previous character string block is added as a tag to each of the first character string blocks | The case where LPD has been applied to the second character string blocks in which a hash value corresponding to a subsequent character string block is added as a tag to each of the first character string blocks |
| Split M -> (m₁ ∥ ... ∥mₙ)for i <- 1 to n do | Split M -> (m₁ ∥...∥mₙ) |
| If i==1 then tag₁=null | for i <- 1 to n do |
| Else tag₁ <- mᵢ₋₁ | If i==n then tagₙ=null |
| Blockᵢ = (tagᵢ ∥mᵢ) | Else tag₁ <- mᵢ₊₁ |
| sampled <- sample s indices from {1, ..., n} | Blockᵢ = (mᵢ ∥tagᵢ) |
| for i in sampled do LDFᵢ·publish(blockᵢ) | sampled <- sample s indices from {1, ..., n} |
| | for i in sampled do LDFᵢ·publish(blockᵢ) |

Referring to Table 1 above, the processor 220 according to an embodiment may obtain the second character string blocks according to one of the two methods, apply LDP to the second character string blocks, and transmit character string data including the second character string blocks to which the LDP has been applied to an external device. According to an embodiment, the memory 230 (e.g., the memory 130 in FIG. 1) may obtain and store a character string input to the electronic device 201 or generated in the electronic device 201. According to an embodiment, the memory 230 may store a program (e.g., the program 140 in FIG. 1) used to perform an operation of obtaining a character string, dividing the obtained character string into designated character string units to obtain first character string blocks, obtaining second character string blocks in which connection information between the first character string blocks is inserted into each of the first character string blocks, applying LDP to each of the second character string blocks, and transmitting character string data including the second character string blocks to which the LDP has been applied, to an external device, as well as various data generated during execution of the program 140. The memory 230 according to an embodiment may largely include a program area 140 and a data area (not shown). The program area 140 may store program information associated with operating the electronic device 201, such as an operating system (OS) (e.g., the operating system 142 in FIG. 1) used to boot the electronic device 201. The data area (not shown) may store transmitted and/or received data and generated data according to various embodiments. In addition, the memory 250 may configured to include at least one storage medium, such as flash memory, a hard disk, a multimedia card micro-type memory (e.g., secure digital (SD) or extreme digital (XD) memory), a RAM, or a ROM. According to an embodiment, the input module 250 (e.g., the input module 150 in FIG. 1) may receive an input corresponding to a character string from the outside (e.g., a user). The input module 250 may include, for example, a microphone, a mouse, a keyboard, a key (e.g., a button), or a digital pen (e.g., a stylus pen).

According to an embodiment, the display 260 (e.g., the display module 160 in FIG. 1) may display various information based on control of the processor 220. For example, the display 260 may display an input character string. According to an embodiment, the display 260 may be implemented in the form of a touch screen. When implemented together with an input module in the form of a touch screen, the display 260 may display various information depending on a touch operation of the user.

The communication module 290 (e.g., the communication module 190 in FIG. 1) according to an embodiment may communicate with an external device (e.g., the server 108 in FIG. 1). For example, the communication module 290 may transmit, to the external device, character string data including the second character string blocks to which LDP has been applied. According to an embodiment, the communication module 290 may include a cellular module, a wireless-fidelity (Wi-Fi) module, a Bluetooth module, or a near field communication (NFC) module. In addition, other modules capable of communicating with an external device may be further included.

According to an embodiment, the electronic device 201 may include various components without limitation to the configuration shown in FIG. 2. According to an embodiment, the electronic device 201 may further include a microphone (not shown). According to an embodiment, the processor 220 may process sound received from the microphone into digital data to obtain voice data and convert the voice data into character data to obtain a character string.

In an embodiment, the main components of the electronic device were explained through the electronic device 201 in FIG. 2. However, in various embodiments, not all of the components are essential components described with reference to FIG. 2, and the electronic device 201 may be implemented with more components than the illustrated components, or the electronic device 201 may be implemented with fewer components. In addition, the connection relationship of the main components of the electronic device 201 described above with reference to FIG. 2 may be changed according to various embodiments.

According to an embodiment, the electronic device (the electronic device 101 in FIG. 1 or the electronic device 201 in FIG. 2) may include a communication module (the communication module 190 in FIG. 1 or the communication module 290 in FIG. 2), memory (the memory 130 in FIG. 1 or the memory 230 in FIG. 2), and at least one processor (the processor 120 in FIG. 1 or the processor 220 in FIG. 2). According to an embodiment, the at least one processor may obtain a character string. The at least one processor according to an embodiment may obtain first character string blocks by dividing the obtained character string into designated character string units. The at least one processor according to an embodiment may obtain second character string blocks by inserting connection information between the first character string blocks into each of the first character string blocks. The at least one processor according to an embodiment may apply a local differential privacy algorithm to each of the second character string blocks. The at least one processor according to an embodiment may be configured to transmit character string data including second character string blocks to which the local differential privacy algorithm has been applied to the outside through the communication module.

According to one embodiment, the electronic device may further include an input module (150 in FIG. 1 or 250 in FIG. 2) configured to receive the character string input to the electronic device.

According to an embodiment, the at least one processor 220 may be configured to obtain [l/k] first character string blocks by dividing the length 1 of the obtained character string by a designated character string unit length k.

According to an embodiment, the at least one processor may be configured to obtain the second character string blocks by adding a hash value, as a tag, corresponding to a previous character string block to each of the first character string blocks.

According to an embodiment, the at least one processor may be configured to obtain the second character string blocks by adding a hash value, as a tag, corresponding to a subsequent character string block to each of the first character string blocks.

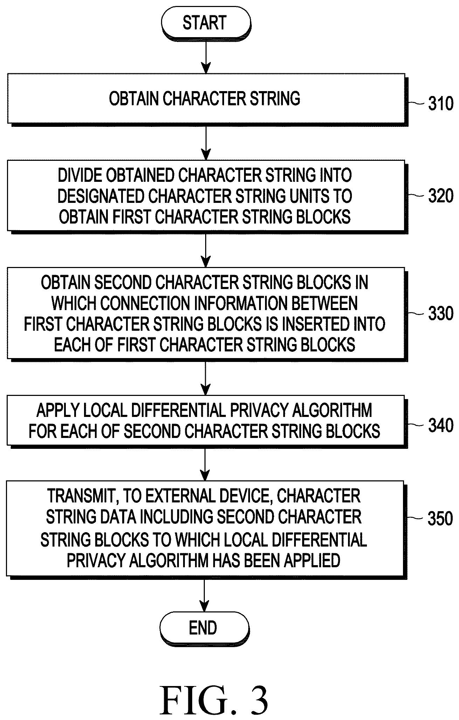

FIG. 3 is a flowchart illustrating a privacy-secured character string data transmission operation in an electronic device according to an embodiment.

Referring to FIG. 3, the processor (e.g., the processor 120 in FIG. 1 or the processor 220 in FIG. 2) of the electronic device (e.g., the electronic device 101 in FIG. 1 or the electronic device 201 in FIG. 2) according to an embodiment may perform at least one of operations 310 to 350.

In operation 310, the processor 220 according to an embodiment may obtain a character string. According to an embodiment, the character string may include a text corresponding to an object to be collected among text input to the electronic device 201 or generated during the operation of the electronic device 201. For example, the character string may include a search word, a message, a uniform resource locator (URL) input to the electronic device 201 or generated in the electronic device 201, and may further include another type of text that is an object to be collected among text input to the electronic device 201 or generated in the electronic device 201.

In operation 320, the processor 220 according to an embodiment may divide the obtained character string into designated character string units to obtain first character string blocks. According to an embodiment, the processor 220 may divide the length 1 of the obtained character string by a designated character string unit length k to obtain [l/k] first character string blocks. According to an embodiment, in case that the value of [l/k] is not an integer, the processor 220 may add a designated padding value to cause the length of a last block among the first character string blocks to become k, so that the value of [l/k] becomes an integer. According to an embodiment, the processor 220 may assign a block index to each of the first character string blocks.

In operation 330, the processor 220 according to an embodiment may obtain second character string blocks in which connection information between the first character string blocks is inserted into each of the first character string blocks. According to an embodiment, the processor 220 may obtain the second character string blocks by adding a hash value corresponding to a previous character string block as a tag to each of the first character string blocks or may obtain the second character string blocks by adding a hash value corresponding to a subsequent character string block as a tag to each of the first character string blocks.

In operation 340, the processor 220 according to an embodiment may apply a local differential privacy (LDP) algorithm to each of the second character string blocks. According to an embodiment, the processor 220 may obtain the second character string blocks to which local differential privacy has been applied by mixing noise with a predetermined probability and distribution into each of the second character string blocks according to the application of the local differential privacy algorithm.

In operation 350, the processor 220 according to an embodiment may transmit character string data including the second character string blocks to which a local differential privacy algorithm has been applied, to an external device (e.g., the server 108 in FIG. 1). For example, the external device may be a device that collects character string data and restores the character string data to obtain an original character string. According to an embodiment, the processor 220 may transmit an LDP report as shown in Table 2 below to the external device when transmitting character string data including the second character string blocks to which the local differential privacy algorithm has been applied.

**[Table 2]**

| |
|---|
| "version": 10, |
| "segments": [ |
| { |
| "algorithm": "SequenceFragmentPuzzle+CountMedianSketch+Split", |
| "splitmethod":"SplitTagFront+SHA256", |
| "key":"com.samsung.keyboard.NewWords.en_US", |
| "parameters": |
| {"fragment:32768,"fragmentCount":5,"fragmentWidth":2,"fragment":285, |
| "epsilon":4,"sequence":32768,"sequence":285, |
| "sequenceFragmentBias":0.5,"puzzleCount":256, |
| "totalLength":200,"blockLength:10","tagLength:2"}, |
| "records": [ |
| "256,22080043A8104800000000580110233909560125...... |

Referring to Table 2 above, the processor 220 according to an embodiment may generate an LDP report including parameters indicating that a method in which a tag is inserted into the front of a character string block and a hash value of SHA256 is included as a tag value, such as "splitmethod":"SplitTagFront+SHA256", is used, and parameters indicating that the character string length is 200, the specified character string unit length is 10, and the tag length is 2, such as "totalLength":200, "blockLength:10", "tagLength:2". A method for transmitting privacy-secured character string data in an electronic device (the electronic device 101 in FIG. 1 or the electronic device 201 in FIG. 2) according to an embodiment may include an operation of obtaining a character string. The method according to an embodiment may include an operation of obtaining first character string blocks by dividing the obtained character string into designated character string units. The method according to an embodiment may include an operation of obtaining second character string blocks by inserting connection information between the first character string blocks into each of the first character string blocks. The method according to an embodiment may include an operation of applying a local differential privacy algorithm to each of the second character string blocks. According to an embodiment, the method may include an operation of transmitting character string data including second character string blocks to which the local differential privacy algorithm has been applied to the outside through a communication module (the communication module 190 in FIG. 1 or the communication module 290 in FIG. 2). According to one embodiment, the method may further include an operation of receiving the character string through an input module (the input module 150 in FIG. 1 or the input module 250 in FIG. 2).

According to an embodiment, the method may include an operation of obtain [l/k] first character string blocks by dividing the length 1 of the obtained character string by a designated character string unit length k.

According to an embodiment, the method may include an operation of obtaining the second character string blocks by adding a hash value, as a tag, corresponding to a previous character string block to each of the first character string blocks.

According to an embodiment, the method may include an operation of obtaining the second character string blocks by adding a hash value, as a tag, corresponding to a subsequent character string block to each of the first character string blocks.

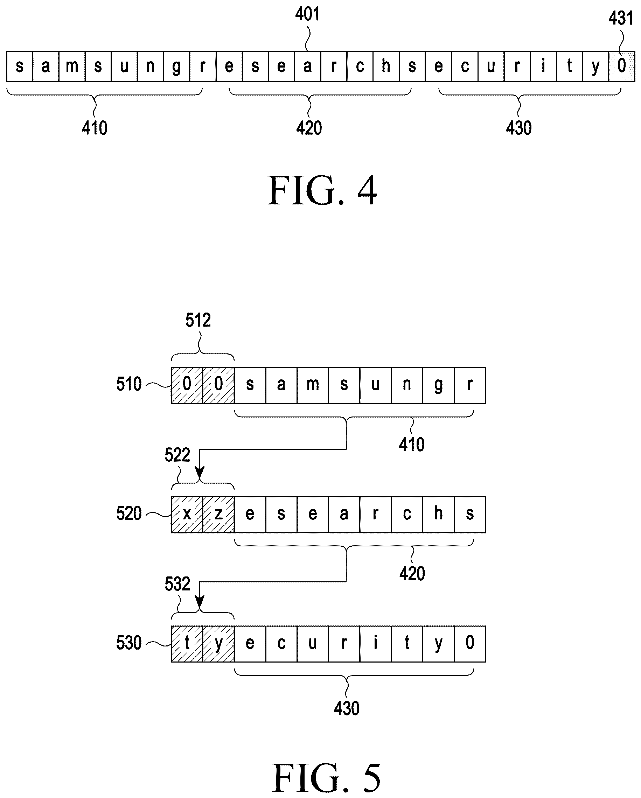

FIG. 4 is a diagram illustrating an example of dividing an obtained character string into designated character string units according to an embodiment.

Referring to FIG. 4, when a character string 401 of "samsungresearchsecurity" is obtained, the processor 220 according to an embodiment may divide the length (l=23) of the obtained character string 401 into a designated character string unit length (k=8) to obtain three first character string blocks 410, 420, and 430. According to an embodiment, in case that the value of [l/k] is not an integer, the processor 220 may add a designated padding value (e.g., 0) 431 to a last block 430 among the first character string blocks 410, 420, and 430 to cause the length of a last block 430 to become k, so that the [l/k] value becomes an integer.

FIG. 5 is a diagram illustrating an example of obtaining second character string blocks by adding a hash value corresponding to a previous character string block as a tag to each of first character string blocks according to an embodiment.

Referring to FIG. 5, the processor 220 according to an embodiment may insert a tag (Tag1) 512 value of null (e.g., 00) to the front of a first character string block 410 among the first character string blocks 410, 420, and 430 since the first character string block 410 has no previous character string block. According to an embodiment, the processor 220 may add a hash value (Hash(samsungr)=xz) corresponding to the first character string block 410 as a tag (Tag2) 522 to the front of a second character string block 420 since a previous character string of the second character string block 420 among the first character string blocks 410, 420, and 430 is the first character string block 410. According to an embodiment, the processor 220 may add a hash value (Hash(esearchs)=ty) corresponding to the second character string block 420 as a tag (Tag3) 532 to the front of a third character string block 430 since a previous character string of the third character string block 430 among the first character string blocks 410, 420, and 430 is the second character string block 420. According to an embodiment, the processor 220 may obtain second character string blocks 510, 520, and 530 by adding a hash value corresponding to the previous character string block as a tag to each of the first character string blocks 410, 420, and 430 using the first method as described above.

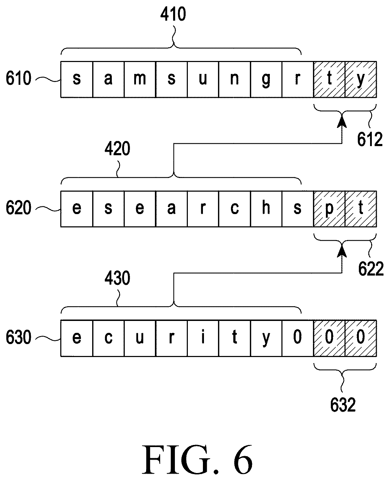

FIG. 6 is a diagram illustrating an example of obtaining second character string blocks by adding a hash value corresponding to a subsequent character string block as a tag to each of first character string blocks according to an embodiment.

Referring to FIG. 6, the processor 220 according to an embodiment may add a hash value (Hash(esearchs)=ty) corresponding to the second character string block 420 as a tag (Tag3) 612 to the back of the first character string block 410 since a subsequent character string of the first character string block 410 among the first character string blocks 410, 420, and 430 is the second character string block 420. According to one embodiment, the processor 220 may add a hash value (Hash(ecurity0)=pt) corresponding to the third character string block 430 as a tag (Tag2) 622 to the back of the second character string block 420 since a subsequent character string of the second character string block 420 is the third character string character block 430. According to one embodiment, the processor 220 may add a null (e.g., 00) value as a tag (Tag3) 632 to the back of the third character string block 430 since the third character string block 430 has no subsequent character string. According to an embodiment, the processor 220 may obtain second character string blocks 610, 620, and 630 by adding a hash value corresponding to the subsequent character string block as a tag to each of the first character string blocks 410, 420, and 430 using the second method as described above.

FIG. 7 is a diagram illustrating an example of applying LDP to each of second character string blocks according to an embodiment.

Referring to FIG. 7, the processor 220 according to an embodiment may apply a local differential privacy (LDP) algorithm to each of the second character string blocks 510, 520, and 530. According to an embodiment, the processor 220 may obtain a 1st second character string block 710 (e.g., the LDP report) to which local differential privacy has been applied by mixing noise with a predetermined probability and distribution into the first character string block 510 according to the application of the LDP algorithm to the first character string block 510 among the second character string blocks 510, 520, and 530. According to an embodiment, the processor 220 may obtain a 2nd second character string block 720 (e.g., the LDP report) to which local differential privacy has been applied by mixing noise with a predetermined probability and distribution into the second character string block 520 according to the application of the LDP algorithm to the second character string block 520 among the second character string blocks 510, 520, and 530. According to an embodiment, the processor 220 may obtain a 3rd second character string block 730 (e.g., the LDP report) to which local differential privacy has been applied by mixing noise with a predetermined probability and distribution into the third character string block 530 according to the application of the LDP algorithm to the third character string block 530 among the second character string blocks 510, 520, and 530.

In the description of FIGS. 4 to 7, the case where the character string is "samsungresearchsecurity" has been described as an example according to one embodiment, but those skilled in the art may process character strings of other lengths as in the FIGS. 4 to 7, and the case where the designated character string unit length is k=8 has been described as an example, but it should be understood that the designated character string unit length value may also use other natural numbers.

FIG. 8 is a block diagram illustrating an external device according to an embodiment.

Referring to FIG. 8, an external device (or server) 801 (e.g., the server 108 in FIG. 1) according to an embodiment may include a processor 820, memory 830, and a communication module 890. The external device 801 may be an external electronic device other than the electronic device 201, and the electronic device 201 may include a configuration of the external device 801 and perform operations of the external device 801.

According to an embodiment, the processor 820 may receive character string data including second character string blocks to which a local differential privacy algorithm has been applied from the electronic device 201 (e.g., the electronic device 101 in FIG. 1). According to an embodiment, the processor 820 may receive, through a communication module 890, character string data from the electronic device 201 designated as a character string collection target. According to an embodiment, the processor 820 may obtain second character string blocks by performing inverse calculation using noise statistics based on a local differential privacy algorithm. The processor 820 according to an embodiment may obtain first character string blocks and connection information between the first character string blocks from the second character string blocks. According to an embodiment, the processor 820 may identify first character string blocks and tag values thereof included in each of the second character string blocks, and obtain the first character string blocks and connection information between the first character string blocks by using the first character string blocks and tag values. According to one embodiment, the processor 820 may obtain a character string based on the first character string blocks and the connection information between the first character string blocks.

The memory 830 according to an embodiment may store various data generated during program execution, including a program used to perform an operation of obtaining a character string from received character string data.

The communication module 890 according to an embodiment may communicate with an electronic device (e.g., the electronic device 101 in FIG. 1 or the electronic device 201 in FIG. 2). For example, the communication module 890 may receive character string data including second character string blocks to which LDP has been applied from the electronic device 201. According to an embodiment, the communication module 890 may include a cellular module, a wireless-fidelity (Wi-Fi) module, a Bluetooth module, or a near field communication (NFC) module. In addition, other modules capable of communicating with the electronic device 201 may be further included.

According to an embodiment, an electronic device (the server 108 in FIG. 1 or the external device 801 in FIG. 8) may include a communication module (the communication module 890 in FIG. 8) and at least one processor (the processor 820 in FIG. 8). The at least one processor according to an embodiment may receive character string data including second character string blocks to which a local differential privacy algorithm has been applied from an external electronic device through the communication module. The at least one processor according to an embodiment may obtain second character string blocks by performing an inverse calculation using noise statistics based on a local differential privacy algorithm with respect to the character string data. The at least one processor according to an embodiment may obtain first character string blocks and connection information between the first character string blocks from the obtained second character string blocks. The at least one processor according to an embodiment may be configured to obtain a character string based on the first character string blocks and the connection information between the first character string blocks.

The electronic device according to an embodiment may further include memory (e.g., the memory 830 in FIG. 8), and the memory may store a program used to obtain the character string from the character string data.

According to an embodiment, the at least one processor may be configured to identify the first character string blocks and the tag value included in each of the obtained second character string blocks, and to obtain the first character string blocks and connection information between the first character string blocks using the first character string blocks and the tag value.

The character string according to an embodiment may include a search word, message, or URL input to the external electronic device or generated in the external electronic device.

According to an embodiment, the tag value may include a hash value corresponding to a previous character string block or a subsequent character string block.

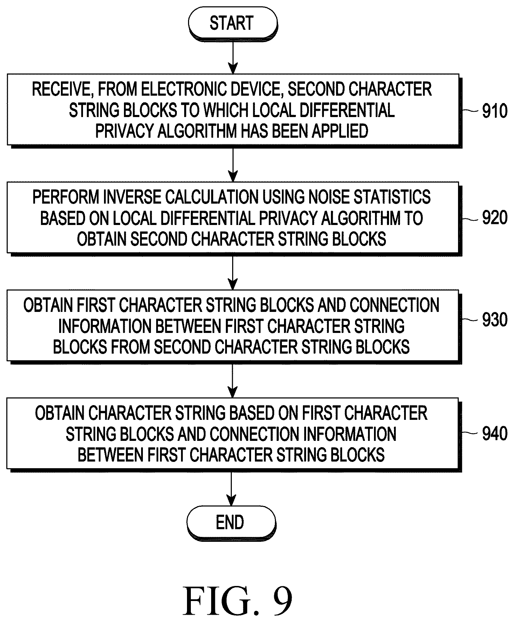

FIG. 9 is a flowchart illustrating an operation of obtaining a character string from character string data received from a server according to an embodiment.

Referring to FIG. 9, the processor 820 of the server 801 (e.g., the server 108 in FIG. 1) according to an embodiment may perform at least one of operations 910 to 940.

In operation 910, the processor 820 according to an embodiment may receive character string data including second character string blocks to which a local differential privacy algorithm has been applied from the electronic device 201 (e.g., the electronic device 101 in FIG. 1). According to an embodiment, the processor 820 may receive, through a communication module 890, character string data from the electronic device 201 designated as a character string collection target.

In operation 920, the processor 820 according to an embodiment may obtain second character string blocks by performing inverse calculation using noise statistics based on a local differential privacy algorithm.

In operation 930, the processor 820 according to an embodiment may obtain first character string blocks and connection information between the first character string blocks from the second character string blocks. According to an embodiment, the processor 820 may identify first character string blocks and tag values thereof included in each of the second character string blocks, and obtain the first character string blocks and connection information between the first character string blocks by using the first character string blocks and tag values.

In operation 940, the processor 820 according to one embodiment may obtain a character string based on the first character string blocks and the connection information between the first character string blocks.

According to an embodiment, a method for receiving privacy-secured character string data in an electronic device (the server 108 in FIG. 1 or the external device 801 in FIG. 8) may include an operation of receiving character string data including second character string blocks to which a local differential privacy algorithm has been applied from an external electronic device through a communication module (the communication module 890 in FIG. 8). The method according to an embodiment may include an operation of obtaining second character string blocks by performing an inverse calculation using noise statistics based on a local differential privacy algorithm with respect to the character string data. The method according to an embodiment may include an operation of obtaining first character string blocks and connection information between the first character string blocks from the obtained second character string blocks. The method according to an embodiment may include an operation of obtaining a character string based on the first character string blocks and the connection information between the first character string blocks.

According to an embodiment, the method may include an operation of identifying the first character string blocks and the tag value included in each of the obtained second character string blocks, and obtaining the first character string blocks and connection information between the first character string blocks by using the first character string blocks and the tag value.

In the method according to an embodiment, the character string may include a search word, message, or URL input to the external electronic device or generated in the external electronic device.

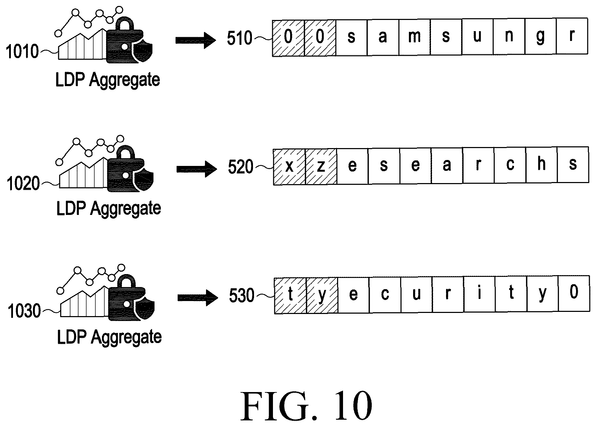

FIG. 10 is a diagram illustrating an example of obtaining a second character string from second character string blocks to which LDP has been applied according to an embodiment.

Referring to FIG. 10, the processor 820 according to an embodiment may receive (or collect) the second character string blocks 1010, 1020, and 1030 to which LDP has been applied, and perform inverse calculation using noise statistics based on a local differential privacy algorithm for each of the second character string blocks 1010, 1020, and 1030 to which LDP has been applied, so as to obtain second character string blocks 510, 520, and 530.

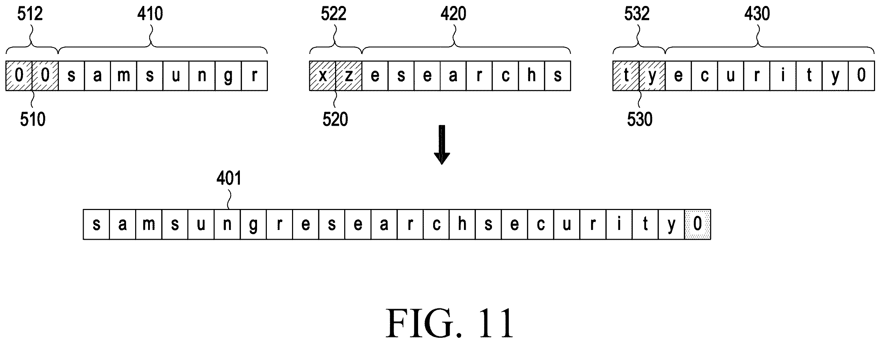

FIG. 11 is a diagram illustrating an example of obtaining first character string blocks and connection information between the first character string blocks from second character string blocks according to an embodiment.

Referring to FIG. 11, the processor 820 of the external device (or server) 801 according to an embodiment may identify the first character string block 410 and a tag value of null (e.g., 00) 512 inserted into the front of the first character string block 410 from one second character string block 510 among the second character string blocks 510, 520, and 530. According to an embodiment, the processor 820 may identify the first character string block 420 and a tag value of xz 522 inserted into the front of the first character string block 420 from another second character string block 520. According to an embodiment, the processor 820 may identify the first character string block 430 and a tag value of ty 532 inserted into the front of the first character string block 430 from still another second character string block 530. According to an embodiment, the processor 820 may identify, based on the tag values 512, 522, and 532, that the first character string block 410 is in the first order, another first character string block 420 is in the subsequent order after the 1st first character string block 410, and still another first character string block 430 is in the subsequent order after the 2nd first character string block (420). According to an embodiment, the processor 820 may obtain a character string 401 by connecting the first character string blocks 410, 420, and 430 based on connection information according to the order.

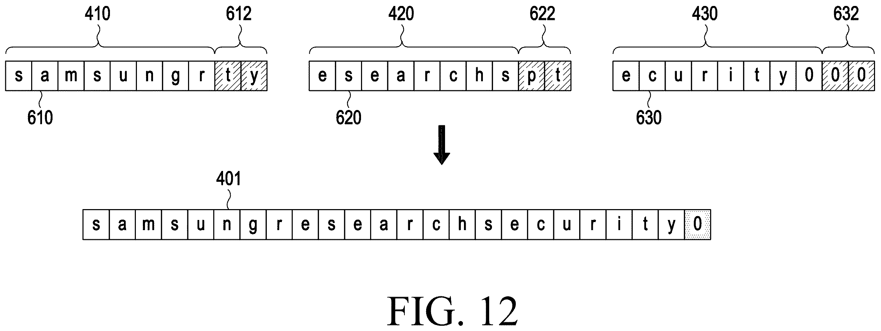

FIG. 12 is a diagram illustrating another example of obtaining first character string blocks and connection information between the first character string blocks from second character string blocks according to an embodiment.

Referring to FIG. 12, the processor 820 of the external device (or server) 801 according to an embodiment may identify the first character string block 410 and a tag value of ty 612 inserted into the back of the first character string block 410 from one second character string block 610 among the second character string blocks 610, 620, and 630. According to an embodiment, the processor 820 may identify the first character string block 420 and a tag value of pt 622 inserted into the back of the first character string block 420 from another second character string block 620. According to an embodiment, the processor 820 may identify the first character string block 430 and a tag value of 00 632 inserted into the back of the first character string block 430 from another character string block 630. According to an embodiment, the processor 820 may identify, based on the tag values 612, 622, and 632, that the first character string block 430 is in the last (third) order, another first character string block 420 is in the previous order of the 3rd first character string block 430, still another first character string block 410 is in the previous order of the 2nd first character string block 420, and the first character string block 420 is in the first order. According to an embodiment, the processor 820 may obtain a character string 401 by connecting the first character string blocks 410, 420, and 430 based on connection information according to the order.

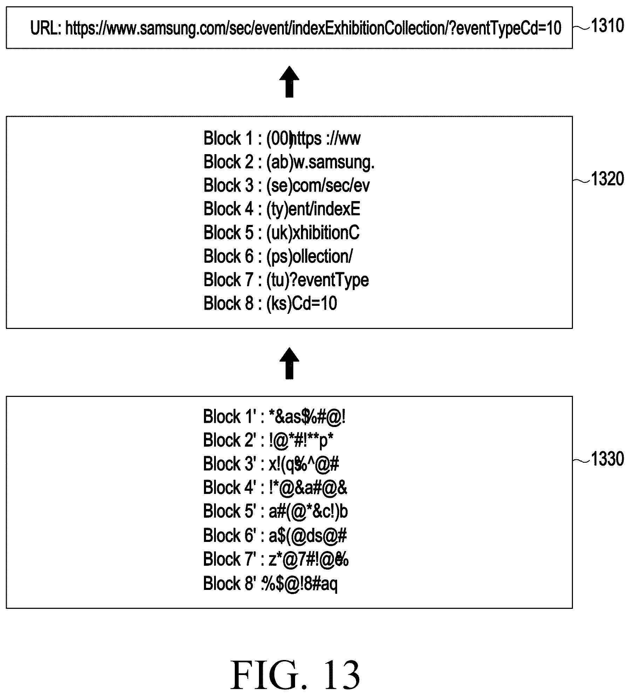

FIG. 13 is a diagram illustrating an operation of transmitting character string data corresponding to a URL in an electronic device and converting character string data received by a server to a URL according to an embodiment.

Referring to FIG. 13, the processor 220 (or the processor 120 in FIG. 1) of the electronic device 201 (or the electronic device 101 in FIG. 1) according to an embodiment may obtain a URL, "https:/www.samsung.com/sec/event/indexExhibitionCollection/?eventTypeCd=10" as a character string input by a user or generated by the electronic device 102 (1310).

According to an embodiment, the processor 220 may obtain eight first character string blocks by dividing the length (L=75) of the obtained "https:/www.samsung.com/sec/event/indexExhibitionCollection/?eventTypeCd=10" into a designated character string unit length (K=10). According to an embodiment, in case that the value of [1/k] is not an integer, the processor 220 may add a designated padding value (e.g., 00000) to cause the length of a last block among the first character string blocks to become k, so that the value of [1/k] becomes an integer (8). According to an embodiment, the processor 220 may obtain second character string blocks by adding a tag value to the front or back of each of the first character string blocks. FIG. 13 illustrates second character string blocks 1320 obtained by adding a tag value to the front of each of the first character string blocks. For example, the processor 220 may insert a tag value of null (e.g., 00) to the front of the character string block of "https:/ww" since the character string block of "https:/ww" has no previous character string block. According to an embodiment, the processor 220 may add a hash value (Hash(https:/ww)=ab) corresponding to "https:/ww" as a tag to the front of the character string block of "w.samsung." since the previous character string of the character string block of "w.samsung." is "https:/ww." According to an embodiment, the processor 220 may add a hash value (Hash(w.samsung.)=se) corresponding to "w.samsung." as a tag to the front of the character string block of "com/sec/ev" since the previous character string of the character string block of "w.samsung." is "w.samsung." According to an embodiment, the processor 220 may add a hash value (Hash(com/sec/ev)=ty) corresponding to "com/sec/ev" as a tag to the front of the character string block of "ent/indexE" since the previous character string of the character string block of "ent/indexE" is "com/sec/ev." According to an embodiment, the processor 220 may add a hash value (Hash(ent/indexE)=uk) corresponding to "ent/indexE" as a tag to the front of the character string block of "xhibitionC" since the previous character string of the character string block of "xhibitionC" is "ent/indexE." According to an embodiment, the processor 220 may add a hash value (Hash(xhibitionC)=ps) corresponding to "xhibitionC" as a tag to the front of the character string block of "ollection/" since the previous character string of the character string block of "ollection/" is "xhibitionC". According to an embodiment, the processor 220 may add a hash value (Hash(ollection/)=tu) corresponding to "ollection/" as a tag to the front of the character string block of "?eventType" since the previous character string of the character string block of "?eventType" is "ollection/". According to an embodiment, the processor 220 may add a hash value (Hash(?eventType)=ks) corresponding to "?eventType" as a tag to the front of the character string block of "Cd=10" since the previous character string of the character string block of "Cd=10" is "?eventType". According to an embodiment, the processor 220 may apply a local differential privacy algorithm to each of the second character string blocks (block 1 to block 8) 1320 obtained through the method described above to obtain character string data including the second character string blocks (block 1' to block 8') 1330 to which the local differential privacy algorithm has been applied, and transmit the obtained character string data to the external device 801.

According to an embodiment, the processor 820 of the external device 801 (or the server 108 in FIG. 1) may receive the character string data, and may perform an inverse calculation using noise statistics based on a differential privacy algorithm with respect to the second character string blocks (block 1' to block 8') 1330 to which the local differential privacy algorithm has been applied included in the character string data, so as to obtain the second character string blocks 1320. According to an embodiment, the processor 820 may obtain first character string blocks and connection information between the first character string blocks from the second character string blocks 1320, and restore the character string 1310 based on the connection information.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

An embodiment provides a non-volatile storage medium storing instructions configured to, when executed by an electronic device, cause the electronic device to perform at least one operation, wherein the at least one operation may include an operation of obtaining a character string, an operation of dividing the obtained character string into designated character string units to obtain first character string blocks, an operation of obtaining second character string blocks in which connection information between the first character string blocks is inserted into each of the first character string blocks, an operation of applying a local differential privacy algorithm for each of the second character string blocks, and an operation of transmitting, to the outside through the communication module (190 in FIG. 1 or 290 in FIG. 2), character string data including the second character string blocks to which the local differential privacy algorithm has been applied.

An embodiment provides a non-volatile storage medium storing instructions configured to, when executed by an electronic device, cause the electronic device to perform at least one operation, wherein the at least one operation may include an operation of receiving, from an external electronic device through a communication module, character string data including second character string blocks to which a local differential privacy algorithm has been applied, an operation of obtaining second character string blocks by performing an inverse calculation using noise statistics based on a local differential privacy algorithm with respect to the character string data, an operation of obtaining first character string blocks and connection information between the first character string blocks from the obtained second character string blocks, and an operation of obtaining a character string based on the first character string blocks and the connection information between the first character string blocks.

The embodiments disclosed in the disclosure and the drawings are merely presented as specific examples to easily explain the technical features and help understanding of the disclosure and are not intended to limit the scope of the disclosure. Therefore, the scope of the various embodiments of the disclosure should be construed as encompassing all changes or modifications derived from the technical ideas of the various embodiments disclosed herein in addition to the embodiments disclosed herein.

## Claims

1. An electronic device (101 in FIG. 1 or 201 in FIG. 2) comprising:
a communication module (190 in FIG. 1 or 290 in FIG. 2);
memory (130 in FIG. 1 or 230 in FIG. 2) configured to store instructions; and
at least one processor (120 in FIG. 1 or 220 in FIG. 2) operatively connected to the communication module and the memory,
wherein the instructions, when executed by the at least one processor, cause the electronic device to:
obtain a character string;
obtain first character string blocks by dividing the obtained character string into designated character string units;
obtain second character string blocks by inserting connection information between the first character string blocks into each of the first character string blocks;
apply a local differential privacy algorithm for each of the second character string blocks; and
transmit character string data including the second character string blocks, to which the local differential privacy algorithm has been applied, to outside through the communication module.

2. The electronic device of claim 1, further comprising an input module (150 in FIG. 1 or 250 in FIG. 2) configured to receive the character string input to the electronic device.

3. The electronic device of claim 1 or 2, wherein the instructions, when executed by the at least one processor, cause the electronic device to obtain [1/k] first character string blocks by dividing a length (1) of the obtained character string by a designated character string unit length k.

4. The electronic device of one of claims 1 to 3, wherein the instructions, when executed by the at least one processor, cause the electronic device to obtain the second character string blocks by adding, as a tag, a hash value corresponding to a previous character string block to each of the first character string blocks.

5. The electronic device of one of claims 1 to 4, wherein the instructions, when executed by the at least one processor, cause the electronic device to obtain the second character string blocks by adding, as a tag, a hash value corresponding to a subsequent character string block to each of the first character string blocks.

6. A method for transmitting privacy-secured character string data in an electronic device (101 in FIG. 1 or 201 in FIG. 2), the method comprising:
obtaining a character string;
obtaining first character string blocks by dividing the obtained character string into designated character string units;
obtaining second character string blocks by inserting connection information between the first character string blocks into each of the first character string blocks;
applying a local differential privacy algorithm for each of the second character string blocks; and
transmitting character string data including the second character string blocks, to which the local differential privacy algorithm has been applied, to the outside through a communication module (190 in FIG. 1 or 290 in FIG. 2).

7. The method of claim 6, further comprising receiving the character string through an input module (150 in FIG. 1 or 250 in FIG. 2).

8. The method of claim 6 or 7, comprising obtain [l/k] first character string blocks by dividing a length (l) of the obtained character string by a designated character string unit length (k).

9. The method of one of claims 6 to 8, comprising obtaining the second character string blocks by adding, as a tag, a hash value corresponding to a previous character string block to each of the first character string blocks.

10. The method of one of claims 6 to 9, comprising obtaining the second character string blocks by adding, as a tag, a hash value corresponding to a subsequent character string block to each of the first character string blocks.

11. An electronic device (108 in FIG. 1 or 801 in FIG. 8) comprising:
a communication module (890 in FIG. 8);
memory (830 in FIG. 8) configured to store instructions; and
at least one processor (820 in FIG. 8),
wherein the instructions, when executed by the at least one, cause the electronic device to:
receive character string data including second character string blocks, to which a local differential privacy algorithm has been applied, from an external electronic device through the communication module;
obtain the second character string blocks by performing, for the character string data, an inverse calculation using noise statistics based on the local differential privacy algorithmo;
obtain first character string blocks and connection information between the first character string blocks from the obtained second character string blocks; and
obtain a character string, based on the first character string blocks and the connection information between the first character string blocks.

12. The electronic device of claim 11, wherein the memory is configured to store a program comprising the instructions used to obtain the character string from the character string data.

13. The electronic device of claim 11 or 12, wherein the instructions, when executed by the at least one processor, cause the electronic device to identify the first character string blocks and a tag value included in each of the obtained second character string blocks, and obtain the first character string blocks and connection information between the first character string blocks by using the first character string blocks and the tag value,
wherein the character string includes a search keyword, a message, or an URL input to the external electronic device or generated in the external electronic device, and
wherein the tag value comprises a hash value corresponding to a previous character string block or a subsequent character string block.

14. A method for receiving privacy-secured character string data in an electronic device (108 in FIG. 1 or 801 in FIG. 8), the method comprising:
receiving character string data including second character string blocks, to which a local differential privacy algorithm has been applied, from an external electronic device through a communication module (890 in FIG. 8);
obtaining second character string blocks by performing, for the character string data, an inverse calculation using noise statistics based on a local differential privacy algorithm;
obtaining first character string blocks and connection information between the first character string blocks from the obtained second character string blocks; and
obtaining a character string, based on the first character string blocks and the connection information between the first character string blocks.

15. The method of claim 14, comprising identifying the first character string blocks and a tag value included in each of the obtained second character string blocks, and obtaining the first character string blocks and connection information between the first character string blocks using the first character string blocks and the tag value,
wherein the character string includes a search keyword, a message, or an URL input to the external electronic device or generated in the external electronic device.
